# EUROPEAN PATENT APPLICATION

(11) **EP 4 116 897 A1**
(43) Date of publication of application: **11.01.2023**
(21) Application number: 21184060.8
(22) Date of filing: 06.07.2021
(51) Int. Cl.: G06Q 10/04, G06Q 50/02

(54) **PROCESS AND SYSTEM OF MANAGEMENT AND ANALYSIS FOR AGRICULTURAL PRODUCTION**

(71) Applicant: Pescarmona, Enrique Menotti, Mendoza (AR); Pescarmona, Lucas, Weston, FL 33327 (US)
(72) Inventor: Pescarmona, Enrique Menotti, Mendoza (AR)
(74) Representative: Padial Martinez, Ana Belen

(57) **Abstract**

Process and system of analysis and management for agricultural production, which includes the stages of loading historical data, measuring and surveying present data, predicting meteorological and hydrological events, generating an agricultural handing protocol, and transmitting the agricultural handling protocol.

## Description

### 1. Objective

The objective of this invention is to increase productivity in agricultural production on a global level in a sustainable way. The same is achieved by the use of a combination of a platform, technological means, information and connectivity, which achieves the increase of the performance. Thereby, there will be accomplished an increase in the efficiency of the agricultural supplies which are necessary for production.

The present invention applies new technologies to transform the way in which annual crops are produced and, in this way, improve the yields in a sustainable way. Thus, it contributes to create a higher food security and to satisfy the needs of a world population of more than 9 thousand million inhabitants by the year 2050. Likewise, it further contributes to overcome the growing pressure on the limited resources such as soil, water and energy and to decrease the carbon footprint in the agricultural production.

The excessive or inefficient use of inorganic fertilizers in some territories has had an impact on the acceleration of the mineralization of the soil carbon and its subsequent emission towards the atmosphere, increasing the greenhouse effect. The soil organic carbon reservoirs are at critical levels in many regions due to the unsustainable agricultural practices in many cases (GARDI et al. 2014). This invention proposes a paradigm shift aiming at the reconciliation of productivity and sustainability as well as bringing productivity and distribution closer to the producer and to the consumer.

The invention consists of a set of algorithms of measurement, assessment, decision and response together with a robotic hardware system which allow for the understanding and identification in each case, as well as for the choice of the optimal and most appropriate actions to increase the productivity and to make the use of supplies more efficient so as to contribute to the sustainability of the productive model.

The extreme climate events associated with the increase of global temperature meant losses of grain and livestock in the developing regions equal to USD 13000 million per year and almost half of the losses occurred in ALC (FAO 2017). These effects in the production may be alleviated significantly with the application of the technology proposed by this patent.

The system uses the following Big data (BD) technologies to carry out the analysis of data from sensors and sources that are external to the platform, Artificial Intelligence (Al) to optimize the correlators and generate scenarios that allow to assist in the decision-making process, Internet of Things (loT) to increase the performance of sensors distributed on the field and Machine Learning (ML) for each of the repetitive calculation and computation sequences, to produce a cumulative learning that improves the performance of the whole system over time. The same interact with the system and are complemented with satellite measurements.

The ability to capture data, the sensors and the increasing power of computers enable to generate, process and interpret a great volume of digital data to deduct relationships, establish dependencies and predict results and behaviors.

Through Cloud computing, the system allows to gain access to computing resources in a flexible way and with low management effort since it stores all the information with redundant systems and blocks chain follow-up. While with Internet reaching sensors and tools, this invention allows to collect data following specific rules, cloud computing allows to store and add data thus providing support to big data analysis.

Likewise, through Cloud computing and data analytics, this invention includes machine learning applications and makes it possible to operate at a new level of artificial intelligence. This Artificial Intelligence defined as the machines and systems' ability to acquire and apply knowledge and to have an intelligent behavior, together with technologies based on cognition, help computers to interact, reason and learn as human farmers do, which enables them to perform a wide variety of tasks that normally require the agricultural producer's intelligence and expertise such as visual perception, pests recognition, decision-making, analysis of phenological condition and object manipulation.

### 2. State of the art

For the present development, a survey of patents and patent applications was carried out, the same entailing some characteristics that could be considered similar to ones of the stages of the process defined here. Throughout the development, the aim was to achieve a high degree of precision in the appropriate use of the technology linking mathematical techniques, technological developments and connectivity.

The information produced serves as a support of the agricultural decisions that are assisted by the implementation of Al-Hydro ("Process of hydrological analysis and management for basins and arrangement of hydrological analysis and management for basins to implement this process" of patents AR109623 B1, BR102019003180 B1 and CO 38765, as well as the patent applications EP19157720, US numbers 16/384156 y US 17/305,125, MY PI 2018704220, JP 2019-25512 y MX/a/2018/004740) with a technical-scientific water management at the level of rainfall prediction and particular runoffs for each soil. Thereby, it optimizes the use of fertilizers and nutrients in a friendly way together with the environment management, and necessary guarantees for the final product traceability and food quality are generated.

There exist solutions (CROP YIELD INCREASE WITH PRECISION TECHNOLOGIES - OCTOBER 28, 2020 - https://eos.com/blog/crop-yield-increase/, Customers using Azure Farm Beats - https://www.microsoft.com/en-in/campaign/azure-farmbeats/ - 17-Mar-2021, 11 Agriculture Imaging Solutions for Crops - Analyze - Published: April 13, 2019 - https://www.nanalyze.com/2019/04/agriculture-imaging-crops/) describing some of the stages of the present invention, but none of them comprises everything this development does. Some of these software are focused on the analysis capacity to identify the stages (estates) of crops. Others manage general information for clients with large areas of agricultural land, but do not fully integrate all the solutions for the acquisition of information neither do they solve the connectivity problem as the present invention does.

Cases carrying out revisions were analyzed (Artificial Intelligence for Digital Agriculture at Scale: Techniques, Policy, and Challenges - Somali Chaterji - January 28, 2020) or others which advise the farmer about measures for the optimization of efficiency and sustainability in production strategies (PrecisionAgriculture.pdf, Colorado State University Extension, - Raj Khosla, Solinftec: Empowering Farmers to Do More with Less - https://agtech.cioreview.com/vendor/2020/solinftec - 17-Mar-2021), however, they do not do their own mathematical analyses but rather obtain processed information. Others simply gather information and visualize it at only one location for the farmers to carry out the interpretations to the best of their knowledge (US9667710, US20110313666, US20160063415, US20180020622, US20200163272, US20200202127, US20200160459).

Other developments focus their analysis on crop conditions or, more specifically, on that of the plant, so as to be later able to make its growth projection (Gamaya - Smart Thinking in Agriculture - https://www.heritage.ch/en/news/gamaya-smart-thinking-in-agriculture - 17-Mar-2021, Agremo, Prospera, US8991098, US10151839, US20140288850, US20150370935A1). However, these developments do not render an integral insight of the entire value chain that is related to the field. For example, they do not consider the economic variables, transport logistics or the carbon footprint's decrease.

Unlike those documents that solely behave as a command-and-control computer system (US20200272971) or work only as an information management platform (US20200364843, US20210027397, US20210029866, WO2018187869, WO2020260193), this development further integrates real time information of other variables such as prospective marketing, optimal type of seed, food quality and the optimization of all processes to decrease the carbon footprint.

### 3. Introduction

The invention consists of a set of algorithms for measurement, assessment, decision and response which enable both understanding and identification in each case, as well as to choose the optimal and appropriate actions to increase the productivity in world agriculture.

This system organizes and guides the farmer in a predictive way, designing the best way to obtain and control the product from the prior to-sowing stage (costs and return on investment), during the growth of the crop and in the logistics of distribution and dispatch, enabling traceability at all times. The entire process is guided by artificial intelligence algorithms and processes that run in real time with automatic updates.

The structure of the system is characterized by the conjunction of four concurrent disciplines: computing, communications, measurement and numerical simulation, and autonomous and collaborative robotics (collaborative not in the sense of superimposing processes, but instead in identifying the ideal actions for each case). The collaboration is modified by a simultaneous robotic operation. In other words, the robotic fleet is directed, optimized and controlled by a previously programmed plan, but at the same time it counts on modules for field adjustments that work as a local monitoring that is applied through the use of video cameras, including infrared ones.

The intervening processes related to the implementation of the crop itself, considering all factors such as environmental, biological, physical, chemical, handling, pest control and contaminants ones are considered inputs, and are typified according to the case being dealt with in general and to the crop in particular (seeds and induced genetic technology processes), soil, climate, etc.

The productive operation of the agricultural field, together with the intervening aspects such as climate, physical and chemical, biological and technological components, as well as the logistics of the actions are solved by the interoperability of the systems focused on operational control, solving at all times and completely the economic equation of the phenomenon so as to maximize productivity. Therefore, there is a platform for optimal performance control processes related to early diagnosis, automation and digital network connectivity.

Thus, it is characteristic of this system to use BIG DATA, ON-LINE DATA, with a superior interpretative layer of Artificial Intelligence, as well as the information provided by satellites and applied in earth observation and data adjustments based on sensor/instrumentation measurements deployed in the field.

The analysis of the classical man-plant (plantation) relationship requires a strict and extensive work, which consists of obtaining information, processing information, seeking appropriate solutions, implementing such solutions, applying mechanisms to correct deviations and many times fighting untimely against the climate behavior. This invention substantially modifies this relationship, automating the process and making it possible to evaluate the planning *versus* the reality, either in favour or against. So, the relationship is now man-platform-robots-cultivation (control crops)-robots-platform-man.

The platform acquires and processes all the information, both past and present, local and remote, thus enabling the farmer to order, execute the plan, be informed and make corrections, as correctable deviations of the expected result may appear. The general operating logics, which will be later detailed as a process flow, can be summarized in the following figure:

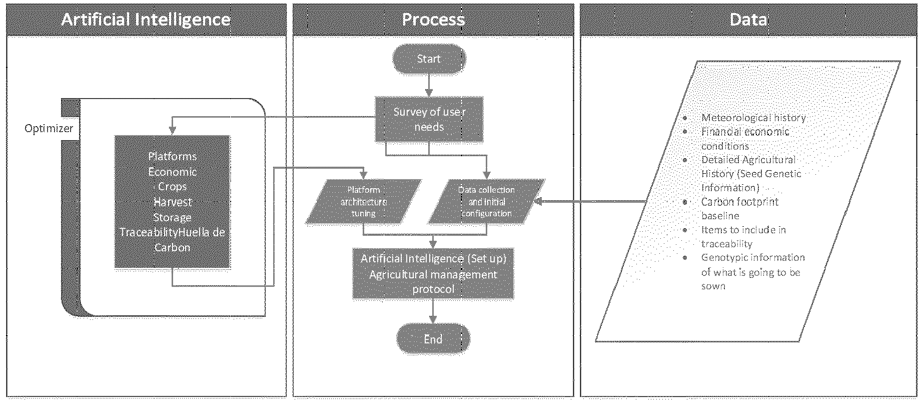

### 4. Operating structure

Three blocks are organized for the application of the concept's sake:
a. Automatic nutrient analysis, measurement and dosing systems.
b. Application of automated actions by means of application-specific robots with various functions.
c. Control of remote and autonomous operating robots implemented with artificial intelligence algorithms, BIG DATA, machine learning and mathematical prediction models as aimed at increasing the productivity of AGRO in the world and reducing the carbon footprint in the process.

### 5. Support structure

a. In Agro, by combining various scenarios from which information can be obtained, we can comprehensively see how to identify and improve agricultural productivity substantially.
b. Technological solutions to correct the target:
   1. Use of a digital platform to synchronously analyze all variables related to increasing productivity and optimizing the use of natural resources to reduce the carbon footprint.
   2. Relevant control variables:
      - Water: quality, quantity and availability.
      - Soil type (pH, conductivity, structure), topography and geological formation.
      - Existing or missing nutrients.
   Verifying them with controlled measurement techniques. For example, satellites, drones, robots, appropriate sensors; in every case, the most optimal and least costly ones will be used.
c. This invention implements a system for interrelating and controlling measurements including:
   1) Techniques and planning for sample collection.
   2) Determination of sample quality.
   3) Monitoring and optimization of information quality by means of the necessary local and remote sensors.
   4) Development and implementation of a statistical correlator.
   5) Development and implementation of a time correlator.
   6) Development and implementation of an economic correlator.
d. Weather Management
   For the interpretation and use of data referring to the weather, a specific and configurable module according to the region is used. This module is a constituent part of Al Hydro, document cited above.
   It allows detailed forecasts to be made for specific areas. These forecasts count on a feedback with satellite information and sensors deployed in the field that update and improve the accuracy.
   Artificial intelligence-based algorithms with matrix mathematics support are used, combining weather forecasts with scenarios of possible rainfall. This is used to generate runoff scenarios that project water flows as distributed on the field. The algorithm counts on reference coefficients, which are adjusted with the values of the variables (water levels, ambient humidity, temperature, water flow rates) as measured in the field. A feedback transfer function is then established to generate accurate forecasts and projections of water availability for the future land to be cultivated.
   With this information it will be possible to establish strategies for seed selection, soil fertilization planning or structuring future harvesting schedules.
   This also generates a data bank that is used by artificial intelligence models to make long-term predictions. Likewise, this information management allows for simulating scenarios that assist in decision making in situations of natural catastrophes or for the mitigation of unexpected events.
e. Seed information management
   Seed information management is a key factor for production projection. For this selection, multiple factors which are available on the platform are considered, which are optimized by the correlators.
   By loading a genetic information bank of available seeds and products (genotype and phenotype, characteristics, costs, availability, soil and water nutrient requirements, yield potential, disease resistance, etc.), the system will identify the ideal seed for the present and projected local conditions for the planting-harvest period.

### 6. Description of the invention

To increase productivity and reduce the carbon footprint in the entire process, several considerations will be made:
a. The main factors affecting the productivity of the area to be intervened are analyzed by obtaining information from sensors in the field or through information from multiple databases.
b. Multispectral crop monitoring
   By using satellite images and combining the information from green indexes, maps will be obtained that will show growth trends, sectors with higher productivity, field-associated problems, intrinsic deficiencies in the plot, management problems on the part of the producer; or preventively, the most efficient way to establish a certain crop in the plot under analysis.
   This technique will provide information on:
   - Surface water: quality, quantity, availability.
   - Soil type: topography and geological formation.
   - Nutrients: existing or missing ones.
   - Productive soil variables: Degree of compaction, electrical conductivity, organic matter content, pH.
   For the estimation of the nutritional composition of the soil, there will be used information from multispectral sensors capable of analyzing spectral images of the elements present on the soil surface or leaves. This information will be analyzed in the corresponding module of the platform.
c. Prospective analysis of weather and meteorological conditions:
   1. With information from satellites, rainfall 7 to 8 days in advance will be observed.
   2. By radars deployed in the field, the amount of rain that will fall at a given location will be obtained with greater precision.
   3. 48 hs before the event (rain), the indicators will be adjusted by means of optimization algorithms for each geographical location where the plantation or crop is being planted. This information will have an impact on a more efficient use of the supplies to be used at the site, as well as on the logistical planning of machinery movement and distribution of supplies.
   4. Predictive weather models will be used to plan the planting strategy 4 months in advance.
d. Automated information management:
   This activity is focused on a computer platform for administration, management and decision making. The Al Hydro application has the particularity of using simultaneously and in a synchronized way a set of solutions that optimize the variables of seed selection, planting time, precision fertilization, water use and optimal harvest time.

A first functional block is called "fixation" of requirements that adjust the expected outcome of a harvest. At the same time, it has a dynamic communication with the users' requirements. Here, the technical capabilities and equipment available for the producer under analysis are examined.

This information is routed to the computational mathematical block to process (on line and in real time) all the algorithms of the correlators and optimizers based on artificial intelligence, machine learning and deep learning processes. This block also contains the mathematical models associated with the biological behavior of different crops such as growth, plant productivity and possible plant defects. The crop to be analyzed is the one corresponding to the selected seed.

As feed information for the mathematical block, the results of the field measurements from fixed, mobile and remote sensors are connected. The particular functionality of this system is the correlator (time comparator) of all the signals arriving at the concentrator, which allow for the detection of the relevance and weight of the sensors distributed in the field. Based on a statistical analysis, it will be possible to evaluate whether the information received is significant for the whole process or whether it is necessary to relocate the process or else add new variables to monitor.

### 7. Process flow chart

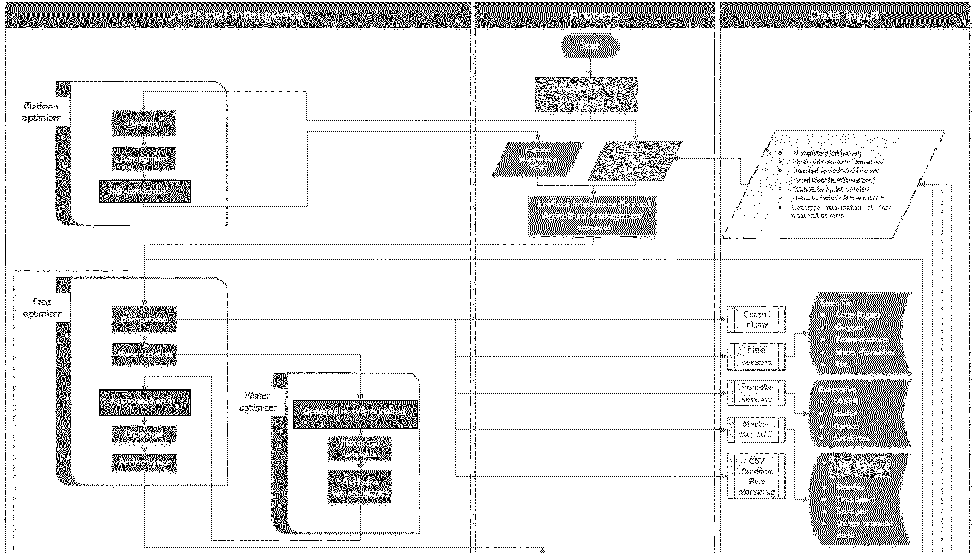

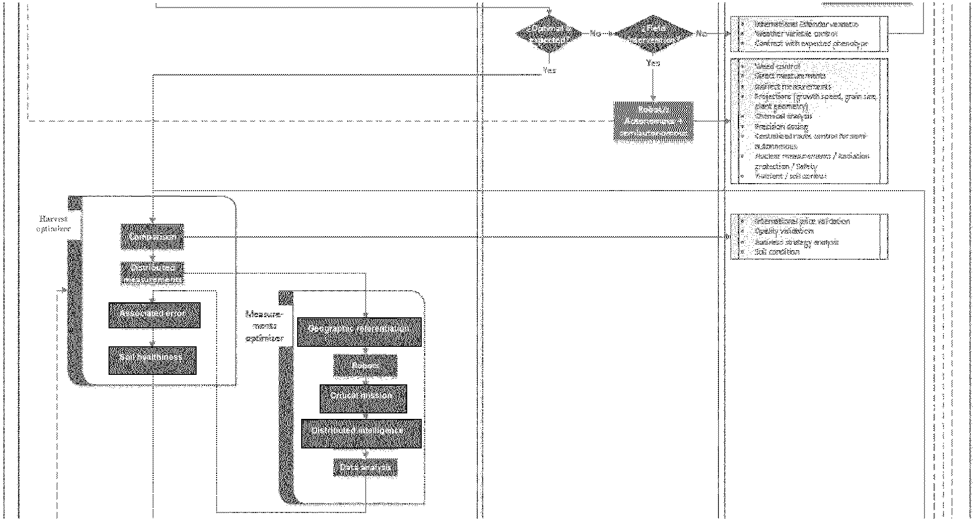

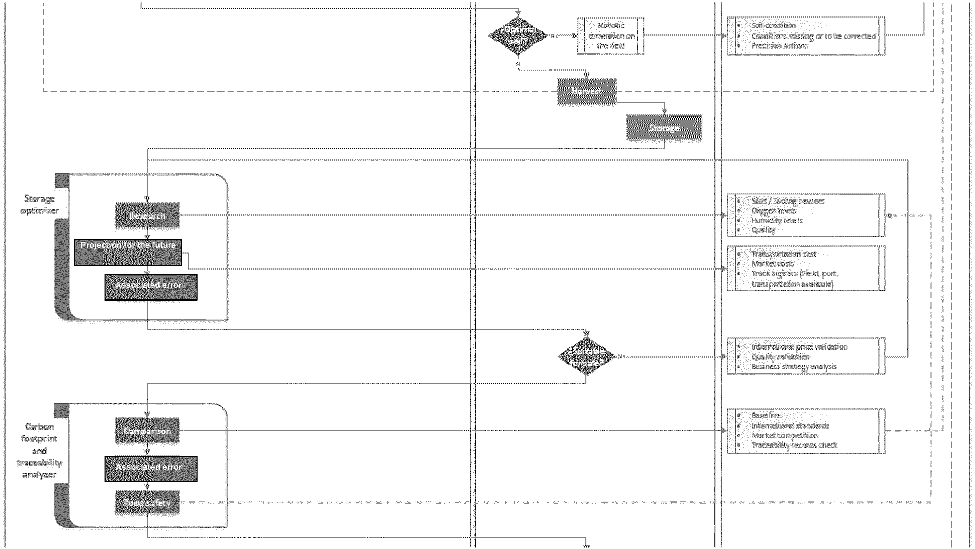

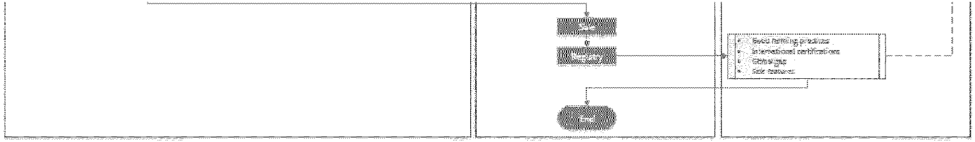

### 8. Critical mission

The collaborative implementation of autonomous and pre-programmed robots in the measurement and correction of variables in the field, contains a system for monitoring their behavior. The robot will always be available and in an optimal condition to execute specific routines. This condition also implies that the safety module be always in control conditions to avoid accidents and be able to fulfill group tasks, adjusting its operation to the appropriate tasks. All these features that will be residing on the platform are not of an operational type, but account for strategic control.

In order to be on-line with all the hectares to be controlled, a connectivity system is implemented to ensure the transfer of data to and from all the stations based on a distribution pattern.

### 9. Connectivity

Information management is supported by ensuring connectivity where the system is located and in the geographical location under production analysis. Data from satellites, digital field sensors, machine sensors and robot sensors feed the mathematical models and correlators. Therefore, ensuring connectivity is a relevant aspect to secure the full operability of the system.

To achieve this objective, three levels of connectivity are defined:
a. Third-party and global: satellites (including microsatellites), space and government agency data, regional information networks, satellite telephony.
b. Regional proprietary: drones, flying wings, ground radars, regional multi-company telephony.
c. Proprietary Local: LoRa networks, field sensors, balloons, weather stations, information concentrators, whole topographic stations, machine sensors, repeaters, alternative/redundant means of communication.

The three levels of connectivity that interconnect with one another ensure the multiplicity of possibilities for information to reach a central concentrator. All levels are redundant and count on a mesh design that avoids common failure mode. Each of the parts has the capacity to store and process information on its own, which in the event of cut off of some of the branches of the mesh, the information will be sent processed once the connection is reestablished.

The application ensures connectivity at each of the points in normal mode. In case of emergencies or adverse weather contingencies, in the event that a node is unable to transmit, it will store the information and at the first moment that connectivity is recovered, what has been stored will be retransmitted.

For cases of strict necessity, the communication system is redundant with an alternative communication system that allows, at a lower transfer rate, data to be sent to the central concentrator. This is a component of the critical mission.

For the specific implementation, it is considered that in semi-urban areas, telephone networks, fiber optics and modems solve the problems of connectivity in general, providing sufficient speed and bandwidth for most applications. Satellite networks have the same coverage, being able to reach remote places where the previous mentioned ones do not exist or are not complete. Between the two alternatives, the latter has a higher cost and better availability and reliability than the former. In addition to the above, cellular telephony and Lora are added.

The essential connective aspect for all systems is the means and the transfer/capture of electrical transmission energy in the atmosphere. This fundamental characteristic ensures either the success or the failure of the objective of the information transfer focused on the goal to be achieved, regardless of the importance of the mission. For a mixed integrated production system (batch and continuous), such as bio, the importance of volume, capital requirements, product quality and safety, and the sequential chaining of operations, make the critical mission factor indispensable. Therefore, such a connectivity device must guarantee the flow of information in the space set-up at a value higher than 98%.

Such a device integrates a three-axis autonomous mobility system (ground transportation and antennas/devices mounted on an aerodynamic balloon inflated by a light, non-explosive gas, with an automatic positioning set point and weather protection using the Al Hydro platform service.

In this way, automatic, manual, autonomous and semi-autonomous operations are secured and protected according to the previously existing hard and independent logics. The energy source is also mobile, and independent of the electrical grid, composed of solar generators, batteries, inverters and any other alternative source characterized by the consumption and power weight ratio of the set.

### Development of own local network

In the case of this invention, applications have been developed for the agricultural sector, many of which require sending data to the cloud for centralized processing, facing the challenge of low maintenance of equipment in the field, such as batteries in the devices.

The handling and processing of large volumes of data on our platform require a constant flow of information from the different devices being distributed.

Original devices and nodes based on LoRa were developed, and LoRaWAN was implemented for the solutions provided in this invention, achieving an extensive coverage for each base station or gateway installed, enabling the integration of devices with different purposes on the same network.

So as to have unlimited connectivity in rural areas for sending data to the cloud, different services are installed the implementation of which will depend on site conditions. Among these options there are:
1) Available links: Output to the Internet is allowed through dedicated links, available on site, linking the Gateway with the link via Wi-Fi, or LAN network.
2) Cellular networks: linking the gateway through the cellular network using 3G or 4G in locations with acceptable coverage.
3) Satellite messaging: for sending data packets through the networks.
4) Satellite Internet Service: using VSAT-type links, providing Internet access through a satellite signal.
5) Point-to-point link: linking the gateway to a remote network with Internet access, using a Wireless link.

The possibility of integrating different technologies in the communication area makes it possible to implement in the short term the solutions provided by this development in areas where there is no connectivity.

The implementation diagram is shown in the following figure:

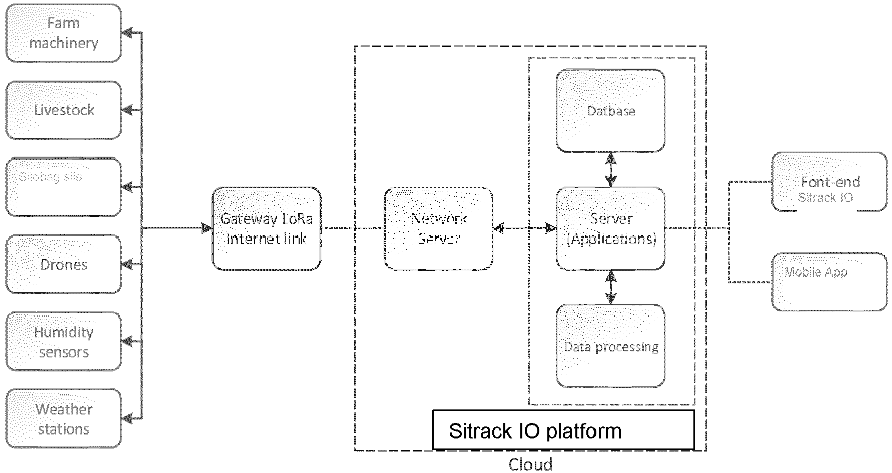

For the agricultural sector, the devices take data on position, acceleration and other variables obtained from sensors, agricultural machinery, animals, weather stations, drones and silos, among others.

Data reception is managed by the Network server and will then be processed and stored by the platform.

Both the Network server and the application server run in the cloud, under a microservices architecture.

### 10. System operating characteristics

The system has been set up to ensure the transfer and processing of information at all times and in real time. For this purpose, a scheme has been defined containing:
a. Closed loop-communications with feedback and simultaneous information from the upper and lower level.
b. Automatic control of the system and self-regulating through artificial intelligence algorithms.
c. Automated and statistical learning based on entered or accumulated information resulting from calculation and analysis processes.
d. Security in sending and receiving data.
e. Continuous monitoring of the condition of the crop, maintaining the optimum productivity level as regards quantity and quality and with the lowest carbon footprint.

### 11. Use of robots

The use of robots will be set up to meet the different demands of each field. There will be an initial basic set-up, but it may be diversified or increased in quantity, depending on the initial characterization of the field. An optimization algorithm produces paths and interventions based on the mapping and characterization of the field. The robots will be an *ad hoc* complement depending on the specific need of the field where the application is deployed.
a. Robot N°1
   It will be a robot counting on rotating hoppers implemented in the seeding machine. The hopper will be automatic and will drop to the bottom the nutrients that are missing in the soil based on the analysis and characterization previously performed.
   These include, among others, the following:
   a. Potassium
   b. Phosphorus
   c. Nitrogen
   d. Micronutrients
   e. Multispectral camera measurement
b. Robot N°2
   It will be used to measure photosynthates and moisture of the plant, soil moisture, air moisture and relative humidity measurements with chemical components.
c. Robot N°3
   It will be used for precision weeding and localized application of herbicides, fungicides and insecticides.

### 12. Advantages of the present invention

The distinct feature of this system is the treatment of plant growth parameters in automatic way, simultaneously using the developed algorithms of artificial intelligence, machine learning, Big data, etc. that are adjusted with on-line measurements and comparing the results on the platform continuously and in real time.

With the information described above, one will know in advance and with sufficient time the best time to harvest and carry out storage and logistics more efficiently.

Likewise, with the data obtained it will be possible to anticipate or postpone harvesting where necessary to obtain the highest yield with the consequent reduction of the carbon footprint and logistical cost.

### 13. Inventors

In this development, Enrique Pescarmona has counted on the collaboration of research engineers Oscar Garcia Peyrano, Jose Gobbee, Javier Quiroga, Leonardo Tarquini, Raúl Marino and Pablo Perinetti.

## Claims

1. Process of analysis and management for agricultural production, **CHARACTERIZED IN THAT** it comprises the stages of:
loading historical data,
measuring and surveying of present data,
predicting meteorological and hydrological events,
generating an agricultural handling protocol, and
transmitting said agricultural handling protocol.

2. The process of analysis and management for agricultural production of Claim 1, **CHARACTERIZED IN THAT** the stage of loading historical data is implemented through the loading of data such as: genetic information of crops, weather history, economic and financial conditions of the markets, carbon footprint baseline, genotypic information of the seed to be planted, crop statistics.

3. The process of analysis and management for agricultural production of Claim 1, **CHARACTERIZED IN THAT** the stage of measuring and surveying present data is implemented through sensors that measure variables of:
quantity, quality and availability of water,
soil types, topography, geological formation, degree of compaction, electrical conductivity, organic matter content, pH,
nutrients in the soil, air, or water,
contaminants in the soil, air, or water,
pests and diseases.

4. The process of analysis and management for agricultural production of Claim 3, **CHARACTERIZED IN THAT** the stage of measuring and collecting data is also implemented through satellite images that allow to visualize the state of the agricultural area as a whole, wherein said images can be of the type SAR (Synthetic Aperture Radar) or RGB and multispectral.

5. The process of analysis and management of agricultural production of Claim 1, **CHARACTERIZED IN THAT** the stage of predicting meteorological and hydrological events is implemented through distributed meteorological stations, rainfall, evapotranspiration, wind speed, ambient and soil humidity, ambient temperature sensors, flow meters in streams and rivers, of height level of ponds, dams, streams and rivers, and permeability and percolation sensors that measure present variables and enter them into the available hydric and weather forecasting models that, together with the accumulated historical data, generate short, medium and long term forecasts.

6. The process of analysis and management for agricultural production of Claim 1, **CHARACTERIZED IN THAT** the stage of generating an agricultural handling protocol comprises collecting - through a decision module implemented with Al algorithms, BIG DATA-, machine learning, Internet of Things (loT) and mathematical prediction models associated with the biological behavior of different crops such as growth, plant productivity and possible plant health problems; the optimal variables that are related to increased productivity, optimization of the use of natural resources and supplies, and reduction of the carbon footprint.

7. The process of analysis and management for agricultural production of Claim 1, **CHARACTERIZED IN THAT** the stage of transmitting said agricultural handling protocol comprises transmitting instructions to one or multiple persons, machines and/or robots.

8. A system of analysis and management for agricultural production **CHARACTERIZED IN THAT** it comprises devices for:
measuring and surveying present data,
predicting meteorological and hydrological events,
generating an agricultural handling protocol and
transmitting and implementing this agricultural handling protocol.

9. The system of analysis and management for agricultural production of Claim 8, **CHARACTERIZED IN THAT** it comprises a plurality of devices for measuring physical, chemical, biological, radiation spectrum variables, comprising at least:
devices for capturing and interpreting satellite images,
devices for measuring variables *in situ* in the agricultural area,
devices for measuring variables on land-based machines,
devices for measuring variables on robots,
devices for measuring variables on drones and/or aerostatic or propelled balloons.

10. The system of analysis and management for agricultural production of Claim 8, **CHARACTERIZED IN THAT** it is composed of a plurality of devices for measuring variables of meteorological and hydrological events that are implemented through distributed meteorological stations, rainfall sensors, evapotranspiration sensors, wind speed sensors, ambient and soil humidity, and ambient temperature sensors, flow meters of streams and rivers, of height level of ponds, dams, streams and rivers, and permeability and percolation sensors that measure present variables and enter them into the available hydric and weather forecasting models that, together with the accumulated historical data, generate short, medium and long term forecasts.

11. The system of analysis and management for agricultural production of Claim 8, **CHARACTERIZED IN THAT** it is composed of a plurality of devices that generate an agricultural handling protocol to collect, through a decision module implemented with Al algorithms, BIG DATA, machine learning, Internet of Things (loT) and mathematical prediction models associated with the biological behavior of different crops such as growth, plant productivity and possible plant health problems, the optimal variables that are related to increased productivity, optimizing the use of natural resources and supplies, and reducion of the carbon footprint.

12. The system of analysis and management for agricultural production of claim 8, **CHARACTERIZED IN THAT** the devices for transmitting said protocol ensure the transmission of information among sensors, predictor elements, protocol generators and providers, and the machinery and robots and the transfer of data among them, such as; satellites, regional information networks, satellite telephony, drones, flying wings, ground radars, regional multi-company telephony, LoRa and LoRaWAN networks, balloons, information concentrators, repeaters, alternative/redundant communication media, Wi-Fi links, LANs, cellular networks, point-to-point links, cloud computing.

13. The system of analysis and management for agricultural production of Claim 8, **CHARACTERIZED IN THAT** the devices for executing said protocol, such as machines and robots, perform the following functions:
to measure variables such as radiation spectra, photosynthates, plant moisture, soil moisture, air moisture, relative humidity and chemical constituents,
to supply nutrients and micronutrients,
to carry out precision weeding and application of herbicides, fungicides and insecticides,
to carry out agricultural tasks such as sowing and harvesting.

## Amended claims

### Amended claims in accordance with Rule 137(2) EPC.

1. Process of analysis and management for agricultural production, **CHARACTERIZED IN THAT** it comprises the stages of:
loading historical data,
measuring and surveying of present data,
predicting meteorological and hydrological events,
generating an agricultural handling protocol, and
transmitting said agricultural handling protocol.

2. The process of analysis and management for agricultural production of Claim 1, **CHARACTERIZED IN THAT** the stage of loading historical data is implemented through the loading of data such as: genetic information of crops, weather history, economic and financial conditions of the markets, carbon footprint baseline, genotypic information of the seed to be planted, crop statistics.

3. The process of analysis and management for agricultural production of Claim 1, **CHARACTERIZED IN THAT** the stage of measuring and surveying present data is implemented through sensors that measure variables of:
quantity, quality and availability of water,
soil types, topography, geological formation, degree of compaction, electrical conductivity, organic matter content, pH,
nutrients in the soil, air, or water,
contaminants in the soil, air, or water,
pests and diseases.

4. The process of analysis and management for agricultural production of Claim 3, **CHARACTERIZED IN THAT** the stage of measuring and collecting data is also implemented through satellite images that allow to visualize the state of the agricultural area as a whole, wherein said images can be of the type SAR (Synthetic Aperture Radar) or RGB and multispectral.

5. The process of analysis and management of agricultural production of Claim 1, **CHARACTERIZED IN THAT** the stage of predicting meteorological and hydrological events is implemented through distributed meteorological stations, rainfall, evapotranspiration, wind speed, ambient and soil humidity, ambient temperature sensors, flow meters in streams and rivers, of height level of ponds, dams, streams and rivers, and permeability and percolation sensors that measure present variables and enter them into the available hydric and weather forecasting models that, together with the accumulated historical data, generate short, medium and long term forecasts.

6. The process of analysis and management for agricultural production of Claim 1, **CHARACTERIZED IN THAT** the stage of generating an agricultural handling protocol comprises collecting - through a decision module implemented with Al algorithms, BIG DATA-, machine learning, Internet of Things (IoT) and mathematical prediction models associated with the biological behavior of different crops such as growth, plant productivity and possible plant health problems; the optimal variables that are related to increased productivity, optimization of the use of natural resources and supplies, and reduction of the carbon footprint.

7. The process of analysis and management for agricultural production of Claim 1, **CHARACTERIZED IN THAT** the stage of transmitting said agricultural handling protocol comprises transmitting instructions to one or multiple persons, machines and/or robots.

8. A system of analysis and management for agricultural production **CHARACTERIZED IN THAT** it comprises devices for:
measuring and surveying present data,
predicting meteorological and hydrological events,
generating an agricultural handling protocol and
transmitting and implementing this agricultural handling protocol.

9. The system of analysis and management for agricultural production of Claim 8, **CHARACTERIZED IN THAT** it comprises a plurality of devices for measuring physical, chemical, biological, radiation spectrum variables, comprising at least:
devices for capturing and interpreting satellite images,
devices for measuring variables *in situ* in the agricultural area,
devices for measuring variables on land-based machines,
devices for measuring variables on robots,
devices for measuring variables on drones and/or aerostatic or propelled balloons.

10. The system of analysis and management for agricultural production of Claim 8, **CHARACTERIZED IN THAT** it is composed of a plurality of devices for measuring variables of meteorological and hydrological events that are implemented through distributed meteorological stations, rainfall sensors, evapotranspiration sensors, wind speed sensors, ambient and soil humidity, and ambient temperature sensors, flow meters of streams and rivers, of height level of ponds, dams, streams and rivers, and permeability and percolation sensors that measure present variables and enter them into the available hydric and weather forecasting models that, together with the accumulated historical data, generate short, medium and long term forecasts.

11. The system of analysis and management for agricultural production of Claim 8, **CHARACTERIZED IN THAT** it is composed of a plurality of devices that generate an agricultural handling protocol to collect, through a decision module implemented with AI algorithms, BIG DATA, machine learning, Internet of Things (IoT) and mathematical prediction models associated with the biological behavior of different crops such as growth, plant productivity and possible plant health problems, the optimal variables that are related to increased productivity, optimizing the use of natural resources and supplies, and reduction of the carbon footprint.

12. The system of analysis and management for agricultural production of claim 8, **CHARACTERIZED IN THAT** the devices for transmitting said protocol ensure the transmission of information among sensors, predictor elements, protocol generators and providers, and the machinery and robots and the transfer of data among them, such as; satellites, regional information networks, satellite telephony, drones, flying wings, ground radars, regional multi-company telephony, LoRa and LoRaWAN networks, balloons, information concentrators, repeaters, alternative/redundant communication media, Wi-Fi links, LANs, cellular networks, point-to-point links, cloud computing.

13. The system of analysis and management for agricultural production of Claim 8, **CHARACTERIZED IN THAT** the devices for executing said protocol, such as machines and robots, perform the following functions:
to measure variables such as radiation spectra, photosynthates, plant moisture, soil moisture, air moisture, relative humidity and chemical constituents,
to supply nutrients and micronutrients,
to carry out precision weeding and application of herbicides, fungicides and insecticides,
to carry out agricultural tasks such as sowing and harvesting.
